# EUROPÄISCHE PATENTSCHRIFT

(11) **EP 2 025 269 B1**
(45) Veröffentlichungstag und Bekanntmachung des Hinweises auf die Patenterteilung: **20.07.2016**
(21) Anmeldenummer: 08105008.0
(22) Anmeldetag: 11.08.2008
(51) Int. Cl.: A47J 31/44

(54) **Schlitzabdeckung**
Groove cover
Recouvrement de fente

(30) Priorität: 14.08.2007 DE 102007038352
(43) Veröffentlichungstag der Anmeldung: 18.02.2009
(73) Patentinhaber: BSH Hausgeräte GmbH, 81739 München (DE)
(72) Erfinder: Gerl, Bernhard, 83278 Traunstein (DE); Müller, Martin, 73479 Ellwangen (DE)

(56) Entgegenhaltungen:
- DE-U1- 20 017 859

## Beschreibung

Die Erfindung betrifft eine Schlitzabdeckung für eine Auslaufvorrichtung eines Kaffeevollautomaten mit den Merkmalen im Oberbegriff des Anspruchs 1. Kaffeemaschinen, insbesondere Kaffeevollautomaten, weisen in der Regel eine das Kaffeegetränk abgebenden Auslaufvorrichtung auf. Aus der DE 298 10 291 U1 sind höhenverstellbare Auslaufvorrichtungen bekannt, mit denen sich ein Höhenabstand zwischen einem Auslaufteil der Auslaufvorrichtung und einem Gefäß zur Anpassung an verschieden hohe Auffangbehälter, wie z.B. Espressotassen, einstellen lässt.

Ein derartiger höhenverstellbarer Kaffeeauslauf optimiert nicht die Kaffeezubereitung an sich, sondern reduziert nur die Spritzer, die bei zu großer Fallhöhe des in den Auffangbehälter und insbesondere die Espressotasse einlaufenden Kaffees entstehen können. Der Benutzer muß dabei die richtige Höhe selbst ermitteln.

Hierzu wird eine Auslaufvorrichtung innerhalb eines Schlitzes in der Frontplatte eines Kaffeevollautomaten vertikal verschiebbar geführt.

Unter dem Begriff "Schlitz" wird eine Öffnung in einem Gehäuse, insbesondere in einer Frontplatte eines Kaffeevollautomaten verstanden, durch die eine vertikal verschiebbar geführte Auslaufvorrichtung, durchtritt. Die Auslaufvorrichtung bzw. ein Verbindungsteil zwischen Auslaufvorrichtung und Führungsschlitten im Inneren des Kaffeevollautomaten durchtritt somit nicht nur den Schlitz, sondern auch eine Schlitzabdeckung.

Dokument DE-U-20017859 offenbart eine Schlitzabdeckung nach dem Oberbegriff des unabhängigen Anspruchs 1.

Bei gattungsgemäßen Auslaufvorrichtungen tritt in der Regel das Problem auf, dass der Schlitz länger ist als die Vorderseite der Auslaufvorrichtung und somit insbesondere bei langen Schiebewegen nur ein geringer Teil des Schlitzes durch die Vorderseite der Auslaufvorrichtung abgedeckt wird.

In den restlichen, nicht abgedeckten Teil des Schlitzes können Staub, Verschmutzungen oder gar Sprühfeuchtigkeit eindringen. Zudem ist ein unerwünschter Einblick und Eingriff in den Kaffeevollautomaten möglich.

Zur Lösung dieses Problems werden üblicherweise in die Seitenwände des Schlitzes sich über die gesamte Schlitzlänge erstreckende Bürsten, Gummilippen oder Abdecklaschen eingesetzt, die einerseits den Schlitz abdecken und andererseits dem Verbindungsteil zwischen Auslaufvorrichtung und Führungsschlitten ausweichen können.

Die Bürsten, Gummilippen etc. haben den Nachteil, dass sie nach längerem Gebrauch, insbesondere nach längerem Unverändertlassen der Stellung der Auslaufvorrichtung ermüden und nicht mehr nach einer Verschiebung der Auslaufvorrichtung ihre ursprüngliche, den Schlitz abdeckende Stellung einnehmen. Dadurch verbleibt an der betreffenden Stelle eine unerwünschte Öffnung im Schlitz.

Bei Bürsten besteht darüber hinaus das Problem, dass sich nach längerer Anwendungszeit einzelne Borsten lösen und in den Schlitz fallen können, was zu beträchtlichen Schäden an den darunter liegenden elektrischen oder mechanischen Einrichtungen führen kann.

Eine weitere Art der Schlitzabdeckung sind Abdecklaschen, die von einem Verbindungsteil hinter dem Schlitz nach oben und nach unten stehen. Die Laschen decken den Schlitz dadurch ober- und unterhalb des Verbindungsteils ab. Dies Art der Schlitzabdeckung hat den Nachteil, dass ober- und unterhalb des Schlitzes zusätzlicher Platzbedarf besteht.
Aufgabe der Erfindung ist es daher eine Schlitzabdeckung für die Auslaufvorrichtung eines Kaffeevollautomaten bereit zu stellen, bei der die oben genannten Probleme gelöst sind.

Die Lösung der gestellten Aufgabe ergibt sich durch eine Schlitzabdeckung für die Auslaufvorrichtung eines Kaffeevollautomaten gemäß Patentanspruch 1. Vorteilhafte Weiterentwicklungen der Schlitzabdeckung werden in den Unteransprüchen definiert.

Erfindungsgemäß ist die Schlitzabdeckung für eine Auslaufvorrichtung eines Kaffeevollautomaten durch eine mit einer Aussparung für den Durchtritt eines Verbindungsteils zwischen Auslaufvorrichtung und Führungsschlitten versehenen Abdeckplatte gebildet, die auf der Rückseite der Frontplatte auf einer horizontalen Kreisbahn verschiebbar geführt wird.

In einer bevorzugten Ausführungsform ist die Abdeckplatte von einer Platte aus einem flexiblen Material, beispielsweise aus einem dünnen Metallblech, gebildet.

In einer weiteren bevorzugten Ausführungsform ist die Abdeckplatte von einer starren, schalenförmig gebogenen Platte, beispielsweise einer verrippten Platte aus Kunststoff, gebildet.

Die Abdeckplatte hat einen annähernd diagonalen Schlitz, durch den ein quaderförmiges Verbindungsteil zwischen Auslaufvorrichtung und Führungsschlitten durchtritt. Wird die Auslaufvorrichtung manuell oder automatisch vertikal verschoben, wird mittels einer dadurch erzeugten Druckkraft die Abdeckplatte auf einer horizontalen Kreisbahn geführt.

Dies erfolgt beispielsweise dadurch, dass bei einer Aufwärtsbewegung der Auslaufvorrichtung eine Kante des Verbindungsteils eine Druckkraft auf eine obere Schlitzkante der Abdeckplatte ausübt, und so die Platte auf einer horizontalen Kreisbahn führt.
Wird die Auslaufvorrichtung nach unten geschoben, dann übt eine Kante des Verbindungsteils auf eine untere Schlitzkante der Abdeckplatte einen Druckkraft aus, so daß die Abdeckplatte wiederum auf einer horizontalen Kreisbahn verschoben wird. In diesem Fall jedoch in die entgegen gesetzte Richtung.

Vorteilhafterweise sind die Kanten des, beispielsweise quaderförmigen Verbindungsteils und / oder die obere und untere Schlitzkante der Abdeckplatte mit einem gleitfähigen Material beschichtet oder besteht aus einem derartigen Material.

Die erfindungsgemäße Führung der Abdeckplatte auf einer horizontalen Kreisbahn ermöglicht einerseits eine schlüssige Anlage der Abdeckplatte auf der Rückseite der Frontplatte im Bereich des Schlitzes und andererseits eine Beabstandung der Abdeckplatte in den beiden Seitenbereichen der Frontplatte. Dies ist besonders vorteilhaft, da dadurch die vorzugsweise dünn, da materialeinsparend ausgeführte Frontplatte beispielsweise mittels spritzgegossenen Verstrebungen in den beiden Seitenbereichen stabilisiert werden kann.

Die Führung der Abdeckplatte auf einer horizontalen Kreisbahn erfolgt beispielsweise durch Führungsschienen, Schlitten etc..

Im Folgenden wird eine Ausführungsform der Erfindung anhand von zwei Figuren näher erläutert.
Fig. 1 a und 1 b zeigt die transparent dargestellte Frontplatte eines Kaffeevollautomat mit einer Auslaufvorrichtung.
Fig. 2a und 2b zeigt einen Querschnitt eines Kaffeevollautomaten von oben.

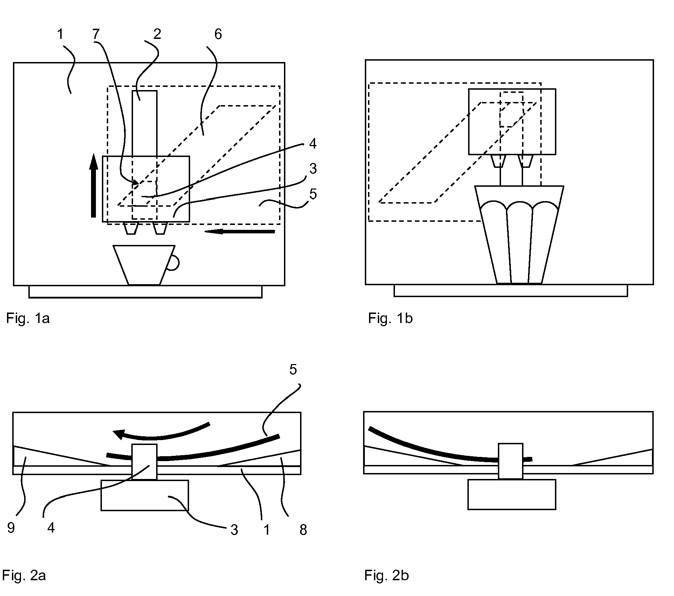

   Fig. 1 a zeigt die Frontplatte 1 eines Kaffeevollautomaten mit einem Schlitz 2, in dem die Auslaufvorrichtung 3 vertikal verschiebbar geführt ist. Das quaderförmige Verbindungsteil 4 zwischen der Auslaufvorrichtung 3 und dem Führungsschlitten (nicht dargestellt) durchtritt die Abdeckplatte 5 und die Frontplatte 1.

Die Abdeckplatte 5 weist einen diagonalen Schlitz 6 auf. Anordnung und Winkel des Schlitzes in Bezug auf die Abdeckplatte 5 ist an die Schlitzbreite und -länge sowie an die Fläche der Vorderseite der Auslaufvorrichtung anzupassen. Bei einer Aufwärtsbewegung der Auslaufvorrichtung (verdeutlicht durch den Pfeil) übt die Kante 7 des Verbindungsteils eine Druckkraft auf eine obere Schlitzkante der Abdeckplatte aus, wodurch die Abdeckplatte 5 auf einer horizontalen Kreisbahn (vgl. Fig. 2) geführt wird.

Fig. 1b zeigt die Stellung der Abdeckplatte 5 nachdem die Auslaufvorrichtung 3 nach oben geschoben wurde.

Fig. 2a zeigt einen Querschnitt eines Kaffeevollautomaten von oben mit der Frontplatte 1 eines Kaffeevollautomaten, der Auslaufvorrichtung 3, dem Verbindungsteil 4 und einer starren, schalenförmig gebogenen Abdeckplatte 5. Die Abdeckplatte wird auf einer horizontalen Kreisbahn geführt, so dass eine schlüssige Anlage auf der Rückseite der Frontplatte 1 im Bereich des Schlitzes und eine Beabstandung der Abdeckplatte in den beiden Seitenbereichen 8 und 9 gegeben ist. Die Frontplatte 1 ist mit Verstrebungen in den beiden Seitenbereichen stabilisiert.

Fig. 2b zeigt die Stellung der Abdeckplatte 5 nachdem die Auslaufvorrichtung 3 nach oben geschoben wurde.

## Patentansprüche

1. Schlitzabdeckung für eine innerhalb eines Schlitzes in einer Frontplatte eines Kaffeevollautomaten vertikal verschiebbar geführte Auslaufvorrichtung, die durch eine mit einer Aussparung für den Durchtritt eines Verbindungsteils zwischen der Auslaufvorrichtung und einem Führungsschlitten versehenen Abdeckplatte gebildet ist, die auf der Rückseite der Frontplatte verschiebbar geführt wird, **dadurch gekennzeichnet, dass** die Abdeckplatte auf einer horizontalen Kreisbahn verschiebbar geführt wird.

2. Schlitzabdeckung nach Anspruch 1, **dadurch gekennzeichnet, dass** die Abdeckplatte aus einem flexiblen Material gebildet ist und in einer kreisbahnförmigen Führungsschiene zwangsgeführt wird.

3. Schlitzabdeckung nach Anspruch 1, **dadurch gekennzeichnet, dass** die Abdeckplatte aus einer starren, schalenförmigen Platte gebildet ist.

## Claims

1. Groove cover for an outlet apparatus guided in a vertically displaceable manner within a groove in a front plate of a fully automatic coffee machine, which outlet apparatus is formed by a cover plate provided with a recess for the passage of a connecting part between the outlet apparatus and a guide carriage, which cover plate is guided in a displaceable manner on the rear of the front plate, **characterised in that** the cover plate is guided in a displaceable manner on a horizontal circular path.

2. Groove cover according to claim 1, **characterised in that** the cover plate is formed from a flexible material and is forcibly guided in a guide rail in the shape of a circular path.

3. Groove cover according to claim 1, **characterised in that** the cover plate is formed from a rigid, bowl-shaped plate.

## Revendications

1. Recouvrement de fente pour un dispositif d'évacuation guidé de manière coulissante verticalement à l'intérieur d'une fente d'une plaque frontale d'une machine à café automatique, qui est formé par une plaque de recouvrement dotée d'un dégagement pour le passage d'une pièce de liaison entre le dispositif d'évacuation et un chariot de guidage, laquelle plaque de recouvrement est guidée de manière coulissante sur l'arrière de la plaque frontale, **caractérisé en ce que** la plaque de recouvrement est guidée de manière coulissante sur une trajectoire circulaire horizontale.

2. Recouvrement de fente selon la revendication 1, **caractérisé en ce que** la plaque de recouvrement est formée à partir d'un matériau souple et subit un guidage forcé dans un rail de guidage en forme de trajectoire circulaire.

3. Recouvrement de fente selon la revendication 1, **caractérisé en ce que** la plaque de recouvrement est formée à partir d'une plaque rigide en forme de cuvette.
